# EUROPÄISCHE PATENTANMELDUNG

(11) **EP 2 690 519 A2**
(43) Veröffentlichungstag der Anmeldung: **29.01.2014**
(21) Anmeldenummer: 13156705.9
(22) Anmeldetag: 26.02.2013
(51) Int. Cl.: G05D 23/19, F16K 31/00, F24D 19/10

(54) **Energieautarkes Heizkörperregelventil mit linearem Piezo-Motor**

(30) Priorität: 27.07.2012 DE 102012014908
(71) Anmelder: ROBERT BOSCH GMBH, 70442 Stuttgart (DE)
(72) Erfinder: Kleineikenscheidt, Gerold, 73249 Wernau (DE); Boehm, Karsten, 73728 Esslingen (DE); Zupancic, Indan, 1052 HS Amsterdam (NL)

(57) **Zusammenfassung**

Die Erfindung betrifft einen Ventilaufsatz 4 für ein energieautarkes Heizkörperregelventil 10 mit einem linearen Piezo-Motor 2 als Antrieb, der direkt auf einen Ventilstift 1 wirkt, der mit einem Ventilelement 13 des Heizkörperregelventils verbunden ist. Als Energiequelle wird ein thermoelektrischer Generator 3 verwendet, der die aus einer Temperaturdifferenz gewonnene elektrische Energie in eine Energiespeichereinrichtung einbringt, aus der diese jederzeit abgerufen werden kann. In einer Ausführungsform ist eine unterstützende Energieversorgung mittels eines Photovoltaikelements vorgesehen. Weiterhin kann der erfindungsgemäße Ventilaufsatz 4 mittels einer Benutzerschnittstelle direkt am Ventilaufsatz programmiert werden. Die Benutzerschnittstelle kann einen Funkstandard zur drahtlosen Datenübertragung aufweisen.

## Beschreibung

Die Erfindung betrifft einen Ventilaufsatz für ein energieautarkes Heizkörperregelventil mit linearem Piezo-Motor nach dem Oberbegriff von Anspruch 1 und ein Heizkörperregelventil mit einem Ventilaufsatz nach Anspruch 12.

Im Stand der Technik sind verschiedene Ausführungsformen solcher Ventilaufsätze für Heizkörperregelventile beschrieben. DE 93 12 588 U1 beschreibt einen Ventilaufsatz mit einem elektrischen Motor und einem Temperatur-Weggeber. Das Ventil wird mit einem elektrischen Motor betätigt. Mittels eines Getriebes bewegt der Motor eine Spindel, die auf den Temperatur-Weggeber drückt und somit auf den Stößel, der den Ventilstift betätigt und auf diese Weise das Heizkörperventil entsprechend der voreingestellten Temperatur öffnet oder schließt. Die Temperaturfeinregulierung erfolgt durch den Temperatur-Weggeber. Die für den Motor benötigte elektrische Energie wird durch Solarzellen bereitgestellt, die am Gehäuse angebracht sind. Die von den Solarzellen erzeugte elektrische Energie wird in Akkumulatoren gespeichert. Über eine Tastatur und eine Anzeige an einer Steuereinheit werden die gewünschten Schaltzeiten und dazugehörigen Raumtemperaturen eingegeben. Von Nachteil bei dieser Lösung ist, dass der elektrische Motor zum einen viel Energie verbraucht, weil das Getriebe und die Kraftübertragung auf die Spindel und den Ventilstift den Wirkungsgrad des Motors stark verringert. Weiterhin ist durch das im Getriebe vorhandene Spiel eine Temperaturregulation nur sehr ungenau möglich. Eine Verstellung durch die mechanische Bewegung innerhalb des Getriebes verursacht zudem unangenehme und störende Geräusche. Um den Aufsatz beispielsweise auch in der Dunkelheit betreiben zu können, ist ein Akkumulator vorgesehen, der die Energie speichert. Dieser benötigt zusätzlichen Bauraum und vergrößert damit den Ventilaufsatz, so dass dieser an sichtbaren Heizkörpern sehr unvorteilhaft aussieht.

DE 10 2005 025 501 A1 beschreibt einen Heizkörperventil-Thermostataufsatz mit einem elektrischen Motor. Die Energie zur Betreibung des Motors wird mittels eines thermoelektrischen Generators erzeugt und durch Photovoltaikelemente unterstützt. Der thermoelektrische Generator besteht aus in Reihe geschalteten Thermoelementen und bezieht die elektrische Energie aus einer Temperaturdifferenz zweier unterschiedlicher Metalle oder Halbleiter. Diese Energieerzeugung beruht auf dem Seebeck-Effekt. Die Einstellung der gewünschten Temperatur wird über ein am Ventilaufsatz befindliches Eingabe- und Steuergerät vorgenommen. Von Nachteil bei diesem Heizkörperventil-Thermostataufsatz ist, dass der elektrische Motor viel Energie verbraucht, die nicht immer komplett vom thermoelektrischen Generator geliefert werden kann. Dieser kann zwar von einem Photovoltaikelement unterstützt werden, aber das funktioniert nur bei ausreichend starkem Lichteinfall. In der Dunkelheit kann der Motor die Ventilbedienung nicht immer einwandfrei gewährleisten. Zudem ist der elektrische Motor unpräzise in der Ansteuerung der Position des Ventilstifts, wodurch der Motor zur Erreichung der gewünschten Temperatur das Ventil häufig öffnen bzw. schließen muss. Aufgrund des vorhandenen Getriebes ist eine Verstellung immer mit einer gewissen Geräuschentwicklung verbunden. Dies wird insbesondere in Wohnbereichen häufig als störend empfunden. Wie bei der DE 93 12 588 ist auch bei der DE 10 2005 025 501 A1 die Einstellung der Wunschtemperatur über ein Display möglich.

Die DE 10 2005 038 067 B4 beschreibt einen Ventilaufsatz für ein Heizungs- oder Kälteventil. Dieser Ventilaufsatz weist einen rotierenden Piezo-Motor auf. Dieser Motor kann über Funkwellen kabellos angesteuert werden. Die Energieversorgung erfolgt einerseits über eine Batterie, kann aber auch über ein thermoelektrisches Element in Verbindung mit Solarzellen erfolgen. Von Nachteil hierbei ist jedoch, dass die Stellbewegung des rotierenden Piezo-Motors mittels eines Gewindes in eine lineare Bewegung umgesetzt werden muss, damit der Ventilstift das Heizungsventil weiter öffnen bzw. schließen kann. Dazu sind mehrere Übertragungs- und Betätigungselemente vorgesehen, die zusätzlichen Bauraum benötigen und zudem den Wirkungsgrad des rotierenden Piezo-Motors verringern bzw. seinen Energieverbrauch erhöhen.

Der Erfindung liegt die Aufgabe zugrunde, die Nachteile des Standes der Technik zu beseitigen und einen möglichst kleinen und kompakt gebauten Ventilaufsatz zur Verfügung zu stellen, der energieautark und energiesparend arbeitet, sehr leise ist und möglichst wenig Wartung benötigt. Weiterhin soll der Ventilaufsatz günstig und leicht herstellbar sein und mit wenigen Bauteile auskommen.

Erfindungsgemäß wird dies mit den Merkmalen der Patentansprüche 1 und 12 gelöst. Vorteilhafte Weiterbildungen sind den Unteransprüchen zu entnehmen.

Bei einem Ventilaufsatz, insbesondere für ein Heizkörperregelventil mit einer Stelleinrichtung, die einen Antrieb aufweist und einen Ventilstift, der mit dem Antrieb axial in einer Stellrichtung bewegbar ist, sieht die Erfindung vor, dass der Antrieb als linearer Piezo-Motor ausgebildet ist.

Der erfindungsgemäße Ventilaufsatz für ein Heizkörperregelventil bietet die Möglichkeit einer automatischen und zeitabhängigen Temperaturregulierung in Räumen. Dazu wird beispielsweise über ein Regelventil, mit dem der Ventilaufsatz verbunden ist, der Warmwasserdurchfluss durch einen Heizkörper reguliert. Der kompakte lineare Piezo-Motor des Ventilaufsatzes wirkt dabei auf den Ventilstift, der beispielsweise mit einer Stirnseite an einem Ventilelement des Regelventils anliegt, so dass eine durch den linearen Piezo-Motor erzeugte Bewegung in Stellrichtung über den Ventilstift auf das Ventilelement übertragen wird. Dabei kann vorteilhafterweise auf jegliches Getriebe verzichtet werden. Somit kann der Wirkungsgrad des linearen Piezo-Motors optimal ausgenutzt werden. Der lineare Piezo-Motor besitzt eine hohe Verstellgeschwindigkeit, die direkt oder über ein Zwischenelement, aber ohne Getriebe und damit ohne Reibungsverluste und Spiel auf den Ventilstift übertragen wird. Das hat den großen Vorteil, dass eine exakte und schnelle Ansteuerung möglich ist. Lineare Piezo-Motoren weisen eine hohe Einstellgenauigkeit auf und fahren präzise die gewünschte Position an. Außerdem sind Piezo-Motoren im Ruhezustand selbsthemmend, das heißt, sie benötigen zum Halten ihrer Position keine Zufuhr von elektrischer Energie. Ein energieeffizienter Betrieb ist damit möglich. Ein sogenanntes Kriechen findet nicht statt. Ein weiterer Vorteil von linearen Piezo-Motoren ist, dass diese keine bewegten Teile aufweisen und dadurch spielfrei und geräuscharm arbeiten, kaum Wartung benötigen, keine Abnutzung aufweisen und nur einen geringen Energiebedarf haben.

In einer weiteren Ausführungsform ist vorgesehen, dass eine Feder parallel zum linearen Piezo-Motor auf den Ventilstift wirkt, wobei insbesondere eine axial verschiebbare Platte mit dem Ventilstift fest verbunden ist und die Feder über die axial verschiebbare Platte auf den Ventilstift wirkt. Durch die Kraft der Feder wird die vom Piezo-Motor aufzuwendende Kraft, die erforderlich ist, um den Ventilstift in Öffnungsrichtung des Ventils zu drücken und damit den Wasserdurchfluss durch einen Heizkörper zu verringern, erheblich reduziert. Der Motor muss somit viel weniger Kraft aufbringen und benötigt somit auch weniger Energie. Im Regulierventil wird das Ventilelement in der Regel durch eine weitere Feder in Schließrichtung beaufschlagt. Dieser Feder wirkt dann die Kraft der Feder des Ventilaufsatzes entgegen, so dass das Ventilelement mit weniger Kraft in Öffnungsrichtung bewegbar ist. Die Feder kann über die axial verschiebbare Platte gegen den Ventilstift drücken. Damit steht für die Übertragung der Federkraft eine relativ große Fläche zur Verfügung. Die Platte ist dafür axial unbeweglich mit dem Ventilstift verbunden, beispielsweise über Formschluss. Dies stellt eine relativ einfache und sichere Möglichkeit zur Übertragung der Federkraft auf den Ventilstift dar. Dabei kann es sich bei der axial verschiebbaren Platte auch um eine geführte Platte oder Scheibe handeln, die beispielsweise rotationsfest im Gehäuse des Ventilaufsatzes geführt ist, ganz allgemein auch um eine Abstützstelle, einen Absatz oder Bund am Ventilstift, der der Feder einen Angriffspunkt zur Übertragung der Federkraft auf den Ventilstift bietet.

Weiterhin ist vorteilhaft, wenn der Ventilaufsatz eine Steuereinheit zur Temperaturregelung (mittels Veränderung eines Ventilhubes und eines Heizmediumdurchflusses) aufweist, die den linearen Piezo-Motor in Abhängigkeit einer gemessenen Raum-Isttemperatur, einer vorgebbaren Raum-Solltemperatur und/oder von vorgebbaren Ein- und Ausschaltzeiten steuert. Unter Ein- und Ausschaltzeiten sind Zeiträume zu verstehen, in denen unterschiedliche Temperaturniveaus gewünscht sind. Beispielsweise ist Nachts ein niedrigeres Temperaturniveau gewünscht als tagsüber. Ausschaltzeiten sind also nicht unbedingt Zeiten, in denen ein Durchfluss durch den Heizkörper vollständig gesperrt ist und damit keine Wärmeabgabe erfolgt, sondern können auch Zeiten sein, in denen eine geringere Temperatur gewünscht ist. Es ist auch möglich, in den Ausschaltzeiten die Temperaturregelung über den Piezo-Motor auszuschalten, so dass in diesem Zeitraum der Energiebedarf des Ventilaufsatzes reduziert wird. Die gewünschte Raumtemperatur und/oder gewünschte Ein- und Ausschaltzeiten können an der Steuereinheit des Ventilaufsatzes programmiert werden und der Ventilaufsatz regelt die gewünschten Bedingungen automatisch und benötigt keine weitere Wartung oder Einstellung, sondern kann autark arbeiten. Eine manuelle Betätigung am Heizkörperregelventil ist nicht notwendig. Durch diese mögliche Vorprogrammierung kann eine große Menge an Energie eingespart werden.

Eine andere Ausführungsform sieht vor, dass die Steuereinheit eine Benutzerschnittstelle am Ventilaufsatz aufweist und gegebenenfalls drahtlos ansteuerbar ist. Zum einen bietet die Benutzerschnittstelle an der Steuereinheit die Möglichkeit, manuell die gewünschten Parameter, wie Ein-/Ausschaltzeit, oder gewünschte Raumtemperatur vorzugeben und somit die Steuereinheit zu programmieren. Zum anderen ist es sehr benutzerfreundlich, wenn die Wunschparameter zum Programmieren der Steuereinheit auch über externe Geräte, wie Smartphone, Computer, Fernbedienung usw. eingegeben werden können. Dazu ist es besonders vorteilhaft, wenn die Steuereinheit auch drahtlos ansteuerbar ist, wozu eine Schnittstelle für einen Funkstandard, wie z.B. WLAN, Infrarot, Bluetooth, GSM, UMTS usw. vorgesehen sein kann.

Es ist bevorzugt, dass die Steuereinheit ein Display aufweist. Insbesondere für eine manuelle Programmierung an der Benutzerschnittstelle ist es von Vorteil, wenn die eingegebenen Parameter direkt über ein vorhandenes Display kontrolliert werden können. Aber auch die Soll-Temperatur oder die Ist-Temperatur können über ein solches Display angezeigt werden. Dies kann einerseits über Klartextinformationen erfolgen, aber auch Anzeigen mit optischen Informationen, wie kleinen Symbolen oder Farbverläufen sind denkbar. Eine besonders bevorzugte Ausführungsform sieht dazu ein Display mit Touchfunktion vor. Dadurch ist eine direkte Eingabe über das Display möglich, ohne das zusätzliche Steuertasten benötigt werden. Für die Bedienerschnittstelle ist also nicht viel Raum erforderlich, der Ventilaufsatz kann vielmehr klein gehalten bleiben.

In einer vorteilhaften Ausgestaltung der Erfindung weist der Ventilaufsatz eine Energieerzeugungseinrichtung auf, die als thermoelektrischer Generator ausgebildet ist. Die Energieerzeugungseinrichtung versorgt den Antrieb und die Steuereinheit mit Energie. Thermoelektrische Generatoren haben den Vorteil, dass sie einfach aufgebaut sind, zuverlässig arbeiten und eine sehr lange Lebensdauer haben. Zudem sind sie sehr klein, benötigen dadurch sehr wenig Platz und können vorzugsweise flach verbaut werden. Ein thermoelektrischer Generator kann mehrere in Reihe geschaltete Thermoelemente umfassen und erzeugt elektrische Energie direkt aus Wärme. Dazu werden zwei unterschiedliche Metalle (z.B. Ni, Cr, Fe, Cu, Pt, Rh) oder Halbmetalle (Ge, Si, Se, Te) oder vorzugsweise Halbleitermaterialien (Bi₂Te₃, PbTe, SiGe, BiSb oder FeSi₂) kombiniert. Diese Metalle oder Halbleiter werden einem möglichst großen Temperaturunterschied ausgesetzt. Ein Ende des Leiters sollte also an einem sehr warmen Ort angebracht sein, während das andere Ende des Leiters an einem möglichst kühlen Ort angebracht werden sollte. Vorzugsweise sollten diese Temperaturunterschiede auf möglichst kleinem Raum vorliegen. Ausgehend von dem Temperaturunterschied entsteht eine elektrische Spannung, die auf dem Seebeck-Effekt beruht.

Hierbei ist bevorzugt, dass der thermoelektrische Generator direkt am Ventilaufsatz angebracht ist. Somit kann der thermoelektrische Generator in das Bauteil des Ventilaufsatzes eingebracht werden und benötigt keine zusätzliche Installation. Das Energieerzeugungselement in Form des thermoelektrischen Generators kann mitsamt dem Ventilaufsatz in einem Schritt an den Heizkörper angebracht werden. Um einen möglichst hohen Temperaturunterschied zwischen der warmen und der kalten Seite des Generators zu erhalten, kann es dabei günstig sein, im Bereich des Generators Lüftungsschlitze im Gehäuse des Ventilaufsatzes vorzusehen, die einen Temperaturausgleich zur Umgebung ermöglichen. Kühlrippen oder Kühlkörper können dabei eine Absenkung der Temperatur an der kalten Seite des thermoelektrischen Generators bewirken.

In einer weiteren bevorzugten Ausgestaltung der Erfindung ist der thermoelektrische Generator an einen Heizungsvorlauf angebracht. Dort wird das Heizwasser mit hoher Temperatur zugeführt, so dass ein effektiver Betrieb des thermoelektrischen Generators möglich ist. Das kalte Ende des thermoelektrischen Generators sollte sich an einem möglichst kalten Ort befinden, wobei dieses meist die Raum- bzw. Umgebungstemperatur darstellt. Eine hohe Temperaturdifferenz kann aber auch erreicht werden, wenn der thermoelektrische Generator im Gewindebereich des Ventilaufsatzes angebracht wird und gleichzeitig eine Kühlung durch die Umgebungsluft erfolgt. Dafür können beispielsweise Lüftungsschlitze oder Kühlrippen vorgesehen sein. Zusätzliche Kühlkörper können dabei den Kühleffekt verstärken und somit eine Temperaturdifferenz vergrößern.

Bei einem Ventilaufsatz mit einem thermoelektrischen Generator zur Energieerzeugung ist es zudem günstig, wenn eine zusätzliche Energieerzeugungseinrichtung, insbesondere ein Photovoltaikelement vorgesehen ist. So liegt eine weitere Energiequelle vor. Ein Photovoltaikelement wandelt Lichtenergie in elektrische Energie um. Eine Ausgestaltung von Photovoltaikelementen stellen beispielsweise Solarzellen dar. Mit dieser zusätzlichen Energiequelle wird die Ausfallsicherheit des Ventilaufsatzes ehöht. Insbesondere im Anschluss an einen Zeitraum, in dem keine Erwärmung erfolgt ist, kann die durch den thermoelektrischen Generator bereitgestellte elektrische Energie nicht ausreichen, eine Temperaturregelung sicherzustellen. Durch die zusätzliche Energie, die vom Photovoltaikelement bereitgestellt wird, sollte aber immer genug Energie zur Verfügung stehen. Zusätzlich kann durch eine Energiespeichereinrichtung, die beispielsweise als Doppelschichtkondensator, als Akkumulator oder als chemischer Speicher ausgebildet ist, eine unterbrechungsfreie Energieversorgung garantiert werden. Eine durch Energiemangel bedingte Funktionsstörung des Ventilaufsatzes kann dann nahezu ausgeschlossen werden.

In einer weiteren wichtigen Ausgestaltung der Erfindung weist der Ventilaufsatz ein temperaturabhängiges Ausdehnungselement auf, welches mit dem Ventilstift zusammen wirkt. Dieses Ausdehnungselement wirkt vorzugsweise direkt auf den Ventilstift oder aber auf den Piezo-Motor und erlaubt durch seine temperaturabhängige Wärmeausdehnung, bzw. Schrumpfung eine vollkommen autarke Verstellung der Durchflussmenge durch den Heizkörper und kann somit die Raumtemperaturkontrolle vollständig übernehmen. Das Ausdehnungselement benötigt dazu keine weitere Energie. Der lineare Piezo-Motor wird in dieser Ausgestaltung nur zur Steuerung der Ein- und Ausschaltung sowie zur Vorgabe veränderter Solltemperaturen benötigt. Die Temperaturkontrolle wird ausschließlich über die thermische Ausdehnung des Ausdehnungselements gesteuert. Dieser Hybridantrieb ist äußerst energiesparend.

Vorteilhaft ist es weiterhin, wenn das Ausdehnungselement in Reihe mit dem linearen Piezo-Motor angeordnet ist. Durch diese Anordnung können das Ausdehnungselement und der lineare Piezo-Motor synergetisch als Hybridantrieb zusammenwirken und sich auf eine möglichst energiesparende Weise gegenseitig ergänzen.

Weiterhin sieht die Erfindung ein Heizkörperregelventil mit einem Ventilaufsatz vor, bei dem der Ventilstift mit einem Ventilelement des Heizkörperregelventils zusammenwirkt. Der erfindungsgemäße Ventilaufsatz kann einfach und bequem auf ein handelsübliches und standardisiertes Heizkörperregelventil aufgeschraubt werden und ermöglicht eine energieautarke Temperaturregulation in Wohnräumen. Der Ventilaufsatz muss mit den vorgegebenen Heizzeiten und den gewünschten Temperaturen programmiert werden und benötigt keine weitere Wartung oder Kontrolle. Zudem ist der Ventilaufsatz sehr klein und weist maximal die gleiche Größe und Form auf, wie ein herkömmliches und manuell zu bedienendes Thermostatregelventil.

Weitere Merkmale, Einzelheiten und Vorteile ergeben sich aus dem Wortlaut der Ansprüche sowie aus der folgenden Beschreibung von Ausführungsbeispielen anhand der Zeichnungen. Es zeigen in schematischer Ansicht:
- Fig. 1: eine erste Ausführungsform eines Ventilaufsatzes,
- Fig. 2: eine zweite Ausführungsform eines Ventilaufsatzes mit einer Gegendruckfeder,
- Fig. 3: eine dritte Ausführungsform eines Ventilaufsatzes mit einer Gegendruckfeder und einem Hybridantrieb.

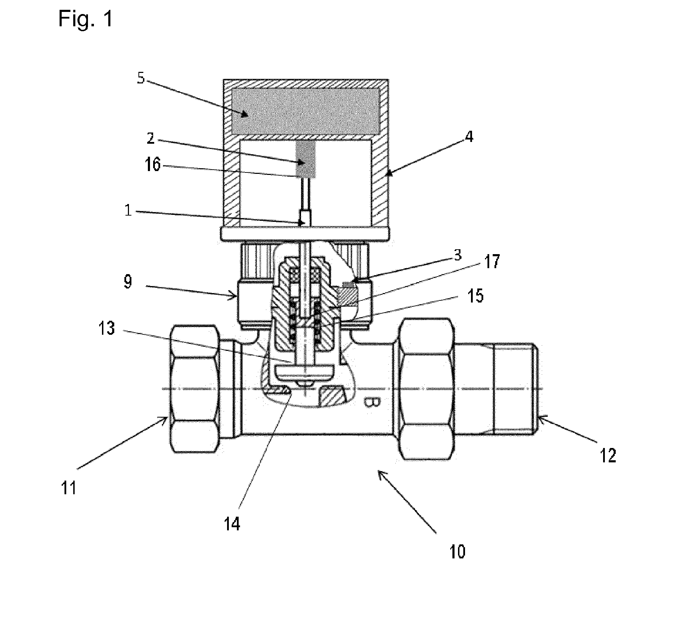

In Fig. 1 ist ein allgemein mit 4 gekennzeichneter Ventilaufsatz für ein handelsübliches und standardisiertes Heizkörperregelventil mit einem Ventilstift 1 in Schnittansicht gezeigt. Der Ventilaufsatz 4 ist an einem Heizkörperregelventil 10 befestigt. Ein linearer Piezo-Motor 2 ist direkt über dem Ventilstift 1 angeordnet. Der Ventilstift 1 ist also direkt von dem Piezo-Motor 2 axial verschiebbar. Der lineare Piezo-Motor 2 muss somit nur kurze und damit energiesparende Linearbewegungen bewirken. Die Wegstrecke, die der Ventilstift 1 dabei bewegt wird, ist abhängig von einem Vergleich der Ist- und Solltemperatur und wird von einer nicht gezeigten Regelelektronik vorgegeben.

Die für den linearen Piezo-Motor 2 und andere elektrische Bauteile benötigte Energie wird von einem thermoelektrischen Generator 3 bereitgestellt. Zusätzlich kann ein nicht dargestellter Energiespeicher vorgesehen sein, der sich zusammen mit der Elektronik in einem Elektronikgehäuse 5 im oberen Teil des Ventilaufsatzes 4 befindet. Dieser Energiespeicher wird z.B. mit der Energie, die mittels eines thermoelektrischen Generators 3 gewonnen wird, aufgeladen und ist dann jederzeit abrufbereit. Der thermoelektrische Generator 3 ist in diesem Beispiel direkt an einem Gewindeanschluss 9 des Ventilaufsatzes 4 angeordnet, mit dem der Ventilaufsatz 4 mit einem Heizkörperegelventil 10 verbunden ist.

Das Heizkörperregelventil 10 weist einen Heizwassereinlauf 11 und einen Heizwasserauslauf 12 auf. Zur Steuerung einer Durchflussmenge umfasst das Heizkörperregelventil 10 ein Ventilelement 13 (z.B. Ventilteller), das mit einem Ventilsitz 14 zusammenwirkt. Das Ventilelement 13 wird durch eine Feder 15 in Öffnungsrichtung belastet.

Zur Verstellung des Durchflusses an Heizwasser wird der lineare Piezo-Motor 2 mit Spannung beaufschlagt. Dies bewirkt eine Längenänderung des Piezo-Motors 2, die eine axiale Verschiebung des Ventilstifts 1 bewirkt, die auf das Ventilelement 13 übertragen wird. Dafür liegt der Piezo-Motor 2 direkt an einer ersten Stirnseite 16 des Ventilstifts 2 an. Eine zweite Stirnseite 17 des Ventilstifts 2 steht über ein Übertragungselement mit dem Ventilelement 13 in Verbindung. Die vom Piezo-Motor 2 erzeugte Stellbewegung wird also ohne Getriebe und spielfrei auf das Ventilelement 13 übertragen. Dadurch ist eine sehr genaue und energieeffiziente Regelung des Durchflusses und damit einer Temperatur möglich.

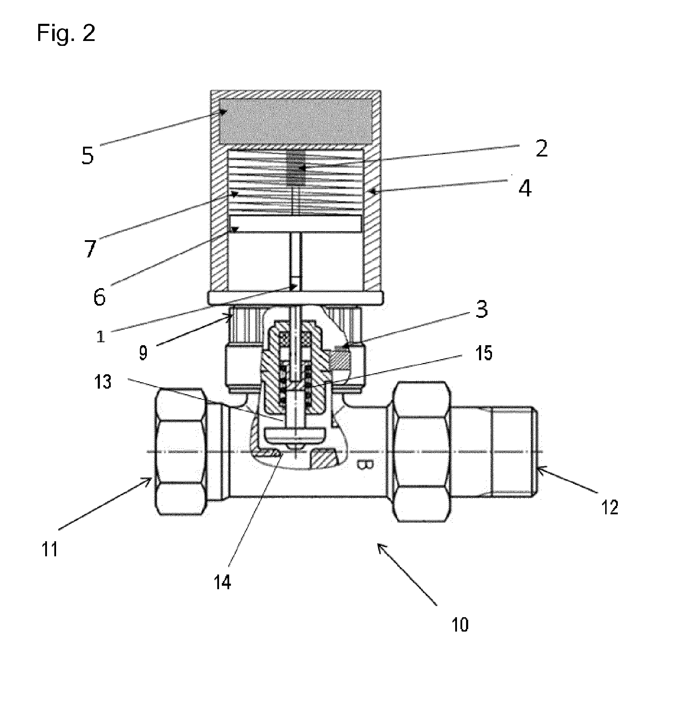

Fig. 2 zeigt eine weitere Ausführungsform des Ventilaufsatzes 4 für ein handelsübliches und standardisiertes Heizkörperregelventil mit einem Ventilstift 1. Das Heizkörperregelventil weist den gleichen Aufbau auf wie in Figur 1. Der Ventilaufsatz 4 ist an dem Heizkörperregelventil 10 befestigt. Der thermoelektrische Generator ist hier direkt am Gewindeanschluss 9 des Ventilaufsatzes 4 angeordnet.

Eine im Ventilaufsatz 4 axial verschiebbare Platte 6 ist axial unbeweglich (fest) mit dem Ventilstift 1 verbunden. Auf der entgegengesetzten Seite der axial verschiebbaren Platte 6 ist eine Feder 7 angeordnet, die den Piezo-Motor umgibt. Die Feder 7 wirkt dadurch parallel zum linearen Piezo-Motor 2. Über diese axial mit dem Ventilstift 1 verschiebbare Platte erfolgt eine Kopplung des linearen Piezo-Motors 2 und der Feder 7 mit dem Ventilstift 1. Die zusätzlich eingebaute Feder 7 wirkt in Schließrichtung des Ventilelements 13, also entgegengesetzt zur Feder 15 des Heizkörperregelventils 10. Die zum Verstellen des Ventilstifts 1 vom Piezo-Motor 2 aufzuwendende Kraft wird dadurch reduziert, wodurch der Energieverbrauch des linearen Piezo-Motors 2 verringert wird. Wird der lineare Piezo-Motor 2 durch die Elektronik angesteuert, beginnt dieser den Ventilstift 1 und damit auch die axial verschiebbare Platte 6 mit einer linearen Kraft in eine axiale Richtung zu bewegen. Die Bewegung wird auf das Ventilelement 13 übertragen, wodurch der Wasserdurchfluss durch das Heizkörperregelventil 10 und damit durch einen nicht gezeigten Heizkörper reguliert wird. Dadurch erfolgt eine Regelung der Wärmeabgabe des Heizkörpers. Die für den linearen Piezo-Motor 2 und andere elektrische Bauteile benötigte Energie wird durch den thermoelektrischen Generator 3, eine nicht dargestellten Solarzelle und/oder durch eine nicht gezeigte Energiespeichereinrichtung bereit gestellt. Die Energiespeichereinrichtung kann zusammen mit der Elektronik im Elektronikgehäuse 5 im oberen Teil des Ventilaufsatzes 4 angeordnet sein.

Der Energiespeicher wird mit Energie, die beispielsweise mittels des thermoelektrischen Generators 3 gewonnen wird, aufgeladen. Damit steht somit jederzeit im Energiespeicher Energie bereit.

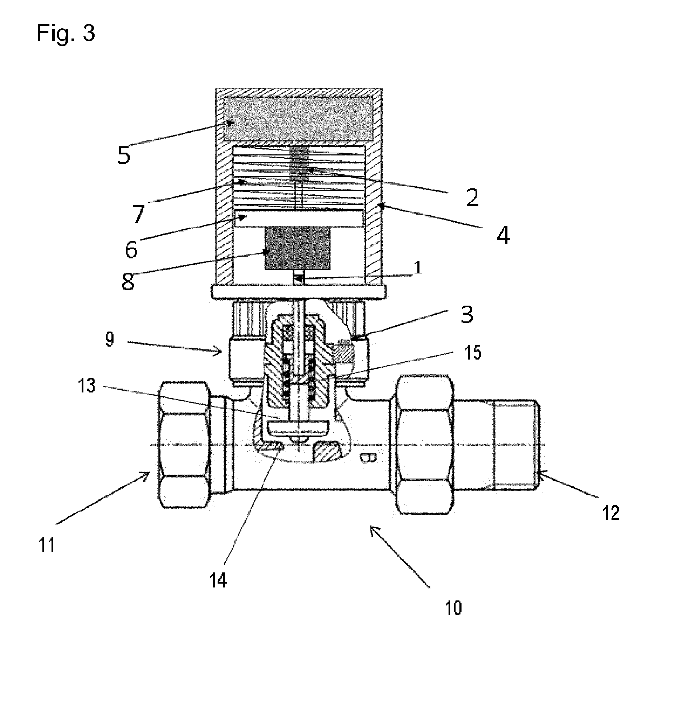

Fig. 3 zeigt eine dritte Ausführungsform des erfindungsgemäßen Ventilaufsatzes 4 für ein handelsübliches und standardisiertes Heizkörperregelventil. Das Heizkörperregelventil weist den gleichen Aufbau auf wie in den vorhergegangenen Beispielen. Der thermoelektrische Generator 3 ist direkt auf dem Gewindeanschluss 9 des Ventilaufsatzes 4 angeordnet.

Der Ventilaufsatz 4 ist über seinen Gewindeanschluss an dem Heizkörperregelventil befestigt. Ein temperaturabhängiges Ausdehnungselement 8 ist direkt über dem Ventilstift 1 angeordnet. Das temperaturabhängige Ausdehnungselement 8 ist beispielsweise als Wachspatrone ausgebildet und dehnt sich bei Erhöhung der Umgebungstemperatur aus und zieht sich bei Erniedrigung der Umgebungstemperatur zusammen. Dadurch wird eine Verstellung des Ventilelements 13 bewirkt.

Auf einer vom Ventilelement 13 abgewandten Seite des Ausdehnungselementes 8 ist die axial verschiebbare Platte 6 angeordnet, die von der Feder 7 und dem linearen Piezo-Motor 2 gegen das Ausdehnungselement 8 gedrückt wird. Das temperaturabhängige Ausdehnungselement 8 regelt über sein thermisches Ausdehnungsverhalten, das über den Ventilstift 1 auf das Ventilelement 13 übertragen wird, den Öffnungsgrad des Heizkörperregelventils 10 und somit die Temperatur im Raum. Die über der Platte 6 angeordnete Feder 7 verringert die zum Verstellen des Ventilstifts 1 benötigte Kraft. Während durch das Ausdehnungselement 8 eine automatische Temperaturregelung erfolgt, erfolgt eine Sollwert-Einstellung durch den oberhalb der axial verschiebbaren Platte 6 angeordneten linearen Piezo-Motor 2. Der Piezo-Motor bewirkt dafür eine Verlagerung des Ventilstiftes 1 zusammen mit dem Ausdehnungselement 8.

Die axiale Bewegung des Ventilstifts 1, die auf das Ventilelement 13 übertragen wird, und die dadurch hervorgerufene Änderung des Wasserdurchflusses durch den nicht gezeigten Heizkörper werden durch das Zusammenspiel von linearem Piezo-Motor 2 und thermischem Ausdehnungselement 8 als Hybridantrieb bewirkt. Die für den linearen Piezo-Motor 2 und andere elektrische Bauteile benötigte Energie wird aus einem thermoelektrischen Generator 3 und/oder einer hier nicht gezeigten Energiespeichereinrichtung bezogen, die sich zusammen mit der Elektronik in einem Elektronikgehäuse 5 im oberen Teil des Ventilaufsatzes 4 befinden kann. Dieser Energiespeicher wird mit Energie, die z.B. mittels des thermoelektrischen Generators 3 gewonnen wird, aufgeladen und ist somit jederzeit abrufbereit im Energiespeicher gespeichert.

Sämtliche aus den Ansprüchen, der Beschreibung und den Zeichnungen hervorgehenden Merkmale und Vorteile, einschließlich konstruktiver Einzelheiten, räumlicher Anordnungen und Verfahrensschritte können sowohl für sich, als auch in den verschiedensten Kombinationen erfindungswesentlich sein. Dabei kann insbesondere das Heizkörperregelventil einen andersartigen Aufbau haben, solange es mit dem erfindungsgemäßen Ventilaufsatz kombinierbar ist.

### Bezugszeichenliste

| | |
|---|---|
| 1. | Ventilstift |
| 2. | Piezo-Motor |
| 3. | Thermoelektrischer Generator |
| 4. | Ventilaufsatz |
| 5. | Elektronikgehäuse |
| 6. | Axial verschiebbare Platte |
| 7. | Feder |
| 8. | Ausdehnungselement |
| 9. | Gewindeanschluss |
| 10. | Heizkörperregelventil |
| 11. | Heizwassereinlauf |
| 12. | Heizwasserauslass |
| 13. | Ventilelement |
| 14. | Ventilsitz |
| 15. | Feder |
| 16.1. | Stirnseite |
| 17. 2. | Stirnseite |

## Patentansprüche

1. Ventilaufsatz (4), insbesondere für ein Heizkörperregelventil (10) mit einer Stelleinrichtung, die einen Antrieb aufweist und einen Ventilstift (1), der mit dem Antrieb axial in einer Stellrichtung bewegbar ist,
**dadurch gekennzeichnet, dass** der Antrieb als linearer Piezo-Motor (2) ausgebildet ist.

2. Ventilaufsatz (4) nach Anspruch 1,
**dadurch gekennzeichnet, dass** eine Feder (7) parallel zum linearen Piezo-Motor (2) auf den Ventilstift (1) wirkt, wobei insbesondere eine axial in Stellrichtung verschiebbare Platte (6) mit dem Ventilstift (1) fest verbunden ist und die Feder (7) über die axial verschiebbare Platte (6) auf den Ventilstift (1) wirkt.

3. Ventilaufsatz (4) nach Anspruch 1 oder 2,
**dadurch gekennzeichnet, dass** der Ventilaufsatz (4) eine Steuereinheit (9) zur Temperaturregelung aufweist, die den linearen Piezo-Motor (2) in Abhängigkeit einer Raum-Isttemperatur, einer Raum-Solltemperatur und/oder von Ein- und Ausschaltzeiten steuert.

4. Ventilaufsatz (4) nach Anspruch 3,
**dadurch gekennzeichnet, dass** die Steuereinheit (9) eine Benutzerschnittstelle am Ventilaufsatz (4) zur Vorgabe von Werten wie Raum-Solltemperatur und/oder Ein- und Ausschaltzeiten aufweist und gegebenenfalls drahtlos ansteuerbar ist.

5. Ventilaufsatz (4) nach Anspruch 3 oder 4,
**dadurch gekennzeichnet, dass** die Steuereinheit (9) ein Display aufweist.

6. Ventilaufsatz (4) nach einem der vorhergehenden Ansprüche,
**dadurch gekennzeichnet, dass** dieser eine Energieerzeugungseinrichtung aufweist, die als thermoelektrischer Generator (3) ausgebildet ist.

7. Ventilaufsatz (4) nach Anspruch 6,
**dadurch gekennzeichnet, dass** der thermoelektrische Generator (3) direkt am Ventilaufsatz (4) angebracht ist.

8. Ventilaufsatz (4) nach Anspruch 6,
**dadurch gekennzeichnet, dass** der thermoelektrische Generator (3) an einen Heizungsvorlauf angebracht ist.

9. Ventilaufsatz (4) nach einem der vorhergehenden Ansprüche,
**dadurch gekennzeichnet, dass** eine zusätzliche Energieerzeugungseinrichtung, insbesondere ein Photovoltaikelement vorgesehen ist.

10. Ventilaufsatz (4) nach einem der vorhergehenden Ansprüche,
**dadurch gekennzeichnet, dass** ein temperaturabhängiges Ausdehnungselement (8) vorgesehen ist, welches mit dem Ventilstift (1) zusammen wirkt.

11. Ventilaufsatz (4) nach Anspruch 10,
**dadurch gekennzeichnet, dass** das Ausdehnungselement (8) in Reihe mit dem linearen Piezo-Motor (2) angeordnet ist.

12. Heizkörperregelventil (10) mit einem Ventilaufsatz (4) nach einem der Ansprüche 1 bis 11, wobei der Ventilstift (1) mit einem Ventilelement des Heizkörperregelventils (10) zusammenwirkt.
